# FASCICULE DE BREVET EUROPEEN

(11) **EP 2 767 060 B1**
(45) Date de publication et mention de la délivrance du brevet: **27.11.2019**
(21) Numéro de dépôt: 12770469.0
(22) Date de dépôt: 03.10.2012
(51) Int. Cl.: H04L 29/06

(54) **PASSERELLE, ET PROCÉDÉ, PROGRAMME D'ORDINATEUR ET MOYENS DE STOCKAGE CORRESPONDANTS**
GATEWAY SOWIE VERFAHREN, COMPUTERPROGRAMM UND SPEICHERMITTEL DAFÜR
GATEWAY, AND METHOD, COMPUTER PROGRAM AND STORAGE MEANS CORRESPONDING THERETO

(30) Priorité: 12.10.2011 FR 1159212
(43) Date de publication de la demande: 20.08.2014
(73) Titulaire: Broadpeak, 35700 Rennes (FR)
(72) Inventeur: DESMAUTS, Jérémy, F-35700 Rennes (FR); LE MANCQ, Jacques, F-35700 Rennes (FR); MARTIN, Jean-François, F-35700 Rennes (FR)
(74) Mandataire: Cabinet Le Guen Maillet
(86) Numéro de dépôt international: PCT/EP2012/069525
(87) Numéro de publication internationale: WO 2013/053628

(56) Documents cités:
- US-A1- 2005 198 097
- US-A1- 2011 119 387
- US-B1- 6 259 701
- US-B1- 6 418 138

## Description

La présente invention concerne une passerelle adaptée pour relier un premier réseau de communication comportant au moins un terminal destiné à consommer des contenus multimédia et un second réseau de communication *via* lequel ladite passerelle est destinée à recevoir lesdits contenus multimédia sous forme de flux.

La démocratisation des contenus multimédia diffusés sous forme de flux, et notamment par diffusion en direct (« *live streaming* » en anglais), a considérablement accru la consommation des ressources des réseaux de communication, et notamment des infrastructures Internet. Cette consommation accrue est notamment due à la prolifération de fournisseurs de contenus multimédia qui diffusent leurs contenus multimédia en point-à-point (« *unicast* » en anglais).

L'explosion de ces offres de contenus multimédia pose le problème de la congestion des réseaux de communication. En effet, l'accès simultané par un grand nombre d'abonnés à des diffusions point-à-point génère de la congestion au niveau de ces réseaux de communication.

A noter qu'il est connu le document US 2011/119387 A1, qui divulgue un serveur détectant que plusieurs clients établissent des sessions séparées et cherchent à accéder à un même contenu sur un dispositif fournisseur de contenu. Le serveur met en œuvre un arbitre qui relie d'autres arbitres respectifs des sessions établies par les clients, et qui sert d'interface avec le dispositif fournisseur de contenu, afin qu'un seul flux ne transite pour ce contenu entre le dispositif fournisseur du contenu et le serveur.

A noter aussi le document US 2005/198097 A1, qui divulgue un serveur via lequel un terminal requiert qu'une source fournisse un contenu. Au lieu de fournir le contenu directement au terminal, la source le diffuse à un groupe de terminaux dont le terminal en question fait partie.

Il est souhaitable de fournir une solution qui permette de réduire la consommation en ressources des réseaux de communication dans lesquels des diffusions point-à-point de contenus multimédia sont requises.

Il est notamment souhaitable de fournir une solution qui soit simple à mettre en œuvre et à faible coût.

L'invention concerne une passerelle telle que revendiquée dans la revendication 1 ci-jointe.

Ainsi, par redirection par la passerelle d'une connexion point-à-point en une connexion point-multipoint, la consommation de ressources dans le second réseau de communication est réduite si le contenu multimédia fait déjà l'objet d'une diffusion point-multipoint (la passerelle n'ayant plus alors qu'à s'abonner à cette diffusion) ou sera réduite pour une prochaine transmission s'il ne fait pas encore l'objet d'une diffusion point-multipoint (le prochain terminal à requérir ce contenu multimédia pourra alors bénéficier de la diffusion point-multipoint).

Selon un mode de réalisation particulier, lesdits moyens de détection comportent des moyens de détection d'une requête d'établissement de la connexion point-à-point transmise par ledit terminal à destination dudit serveur d'origine, et lesdites informations échangées sont des données de localisation uniforme de ressource, identifiant ledit contenu multimédia et comprises dans ladite requête.

Ainsi, la redirection peut s'effectuer avant que la connexion point-à-point ne soit effectivement établie entre le terminal et le serveur d'origine et que le contenu multimédia n'ait commencé à être transmis.

Selon un mode de réalisation particulier, la passerelle comporte des moyens de transmission à un serveur prédéterminé via ledit second réseau desdites données de localisation uniforme de ressource, et en ce que les moyens de réception dudit contenu multimédia sous la forme d'un flux selon la connexion point-multipoint sont adaptés pour recevoir ledit contenu multimédia en provenance dudit serveur prédéterminé.

Ainsi, les données de localisation uniforme de ressource permettent au serveur prédéterminé d'identifier le contenu multimédia et éventuellement le serveur d'origine auprès duquel le contenu multimédia est disponible. Ainsi, si le serveur d'origine ne dispose pas de capacités de diffusion point-multipoint, cela peut être mis en œuvre par le serveur prédéterminé après récupération éventuelle du contenu multimédia auprès du serveur d'origine.

Selon un mode de réalisation particulier, lesdits moyens de détection comportent : des moyens de réception, en provenance dudit serveur d'origine, dudit contenu multimédia sous la forme d'un flux selon la connexion point-à-point ; et des moyens d'obtention, à partir dudit flux selon la connexion point-à-point, de données d'inoculation, de signature ou de tatouage numérique identifiant ledit contenu multimédia. En outre, lesdites informations échangées sont lesdites données d'inoculation, de signature ou de tatouage numérique.

Ainsi, il est possible d'identifier le contenu multimédia même si les échanges entre le serveur d'origine et le terminal pour établir la connexion point-à-point n'ont pas permis d'y parvenir.

Selon un mode de réalisation particulier, la passerelle comporte des moyens d'association desdites données d'inoculation, de signature ou de tatouage numérique et des données de localisation uniforme de ressource comprises dans une requête d'établissement de la connexion point-à-point transmise par ledit terminal à destination dudit serveur d'origine, afin de définir une nouvelle règle de redirection de connexion.

Ainsi, il est possible d'enrichir les règles de redirection de connexion. La prochaine fois qu'une passerelle aura à effectuer une connexion pour ce contenu multimédia, la redirection pourra avoir lieu suite à une interception de la requête d'établissement de connexion point-à-point par le terminal.

Selon un mode de réalisation particulier, la passerelle comporte des moyens de transmission à un serveur prédéterminé via ledit second réseau desdites données d'inoculation, de signature ou de tatouage numérique, et en ce que les moyens de réception dudit contenu multimédia sous la forme d'un flux selon la connexion point-multipoint sont adaptés pour recevoir ledit contenu multimédia en provenance dudit serveur prédéterminé.

Selon un mode de réalisation particulier, le contenu multimédia étant diffusé sous forme d'un flux adaptatif, la passerelle comporte des moyens de modification du manifeste indiquant des débits auxquels ledit contenu multimédia est disponible par suppression d'au moins un débit.

Ainsi, la réduction de la consommation de ressources dans le second réseau de communication est renforcée.

L'invention concerne également un système comportant au moins une passerelle telle que mentionnée ci-dessus dans n'importe lequel de ses modes de réalisation, et comportant en outre un serveur comportant des moyens d'obtention dudit contenu multimédia à partir dudit serveur d'origine.

Selon un mode de réalisation particulier, le système comporte un autre serveur comportant une base de règle de redirection de connexion, et chaque passerelle comporte des moyens d'obtention de règles de redirection de connexion auprès dudit autre serveur.

Ainsi, les règles de redirection de connexion peuvent être facilement partagées par les passerelles, lorsque plusieurs passerelles sont mises en œuvre.

L'invention concerne également un procédé tel que revendiqué dans la revendication 10 ci-jointe.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par un système informatique ou un processeur. L'invention concerne également des moyens de stockage comprenant un tel programme d'ordinateur. Les avantages de ce procédé, de ce programme d'ordinateur et de ces moyens de stockage étant de même nature que ceux évoqués ci-dessus en relation avec les caractéristiques de la passerelle, ils ne seront pas répétés.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement la mise en œuvre d'un système de transmission de contenu multimédia ;
- la Fig. 2 illustre schématiquement une architecture matérielle d'une passerelle du système de transmission de contenu multimédia de la Fig. 1 ;
- la Fig. 3 illustre schématiquement une architecture matérielle d'un serveur de contenus multimédia du système de transmission de contenu multimédia de la Fig. 1 ;
- la Fig. 4 illustre un premier algorithme mis en œuvre par la passerelle ;
- la Fig. 5 illustre un second algorithme mis en œuvre par la passerelle ;
- la Fig. 6 illustre un algorithme mis en œuvre par le serveur de contenus multimédia.

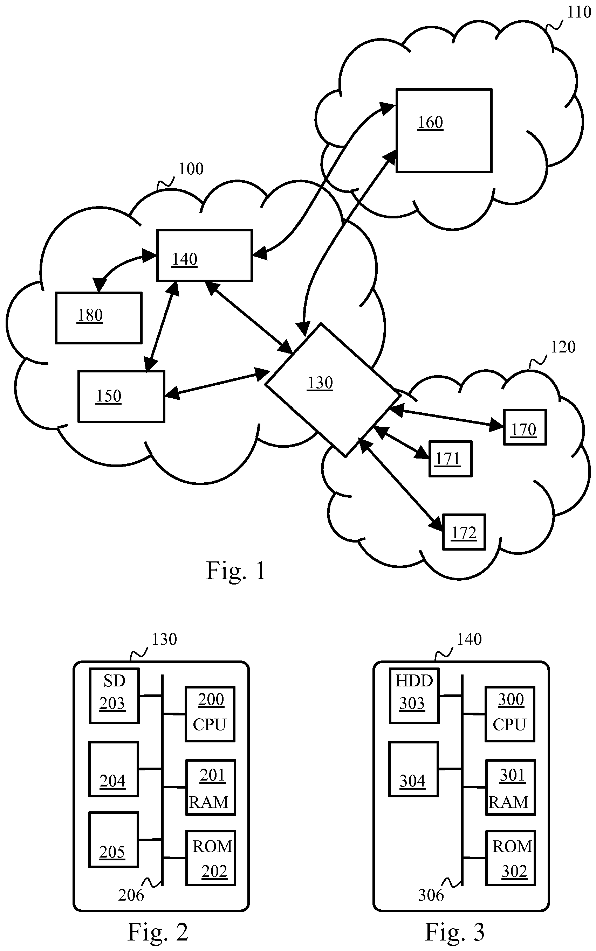

Le système de transmission de contenu multimédia de la Fig. 1 comporte au moins une passerelle 130 et un serveur 140. Par la suite, on appellera ce serveur « *serveur de contenus multimédia* ».

La passerelle 130 est adaptée pour relier un premier réseau de communication 120 comportant au moins un terminal 170, 171, 172 destiné à consommer des contenus multimédia et un second réseau de communication 110 *via* lequel la passerelle 130 est destinée à recevoir ces contenus multimédia sous forme de flux. Ces terminaux peuvent être des équipements TV (*TéléVision*) connectés, des tablettes, des ordinateurs personnels (PC ou « *Personal Computer* » en anglais), des décodeurs numériques (« set top box » en anglais), *etc.*

Un exemple d'architecture matérielle de la passerelle 130 est illustré ci-après en relation avec la Fig. 2.

Le premier réseau de communication 120 est par exemple un réseau domestique de type Ethernet selon la norme IEEE 802.3 (« *Carrier Sense Multiple Access with Collision Detection (CSMA*/*CD) Access Method and Physical Layer Spécifications* ») ou de type Wi-Fi selon la norme IEEE 802.11 (« *Wireless LAN Medium Access Control (MAC) and Physical Layer (PHY) Spécifications* »)*.* D'autres technologies réseau peuvent être mises en œuvre pour réaliser le premier réseau de communication 120.

Le second réseau de communication 100 est par exemple un réseau d'accès à l'Internet géré par un opérateur de service réseau Internet (NSP ou « *Network Service Provider* » en anglais). Le second réseau de communication 100 est par exemple un réseau de fourniture de contenus multimédia (CDN ou « *Content Delivery Network* » en anglais).

Le serveur de contenus multimédia 140 est adapté pour fournir aux terminaux 170, 171, 172 des contenus multimédia sous forme de flux *via* la passerelle 130. Un exemple d'architecture matérielle du serveur de contenus multimédia 140 est illustré ci-après en relation avec la Fig. 3.

Le système de transmission de contenu multimédia de la Fig. 1 peut en outre comporter un autre serveur 150 comportant une base de règle de redirection de connexion. Par la suite, on appellera cet autre serveur « *serveur de règles* ». Le serveur de règles 150 est adapté pour fournir des règles de redirection de connexion à la passerelle 130. Ces règles de redirection de connexion peuvent être requises par la passerelle 130, selon un mode opératoire communément appelé mode « *pull* ». Ces règles de redirection de connexion peuvent être transmises par le serveur de règles 150 à la passerelle 130 sans requête de cette dernière, selon un mode opératoire communément appelé mode « *push* ».

Les règles de redirection de connexion peuvent être fixées à l'avance ou définies automatiquement. Les règles de redirection de connexion peuvent être définies automatiquement par l'intermédiaire de l'expérience acquise par les passerelles, comme la passerelle 130 et/ou le serveur de contenus multimédia 140. Par exemple, la passerelle 130 peut indiquer qu'elle a téléchargé via une URL (« *Uniform Resource Locater* » en anglais ou « *localisation uniforme de ressource* » en français) donnée un contenu comportant des données de tatouage numérique (« *digital watermarking data* » en anglais) ou des données d'inoculation (« *fingerprint data* » en anglais) ou de signature, ce qui permet de créer une nouvelle règle associant le contenu identifié par ces données de tatouage numérique, d'inoculation ou de signature et cette URL.

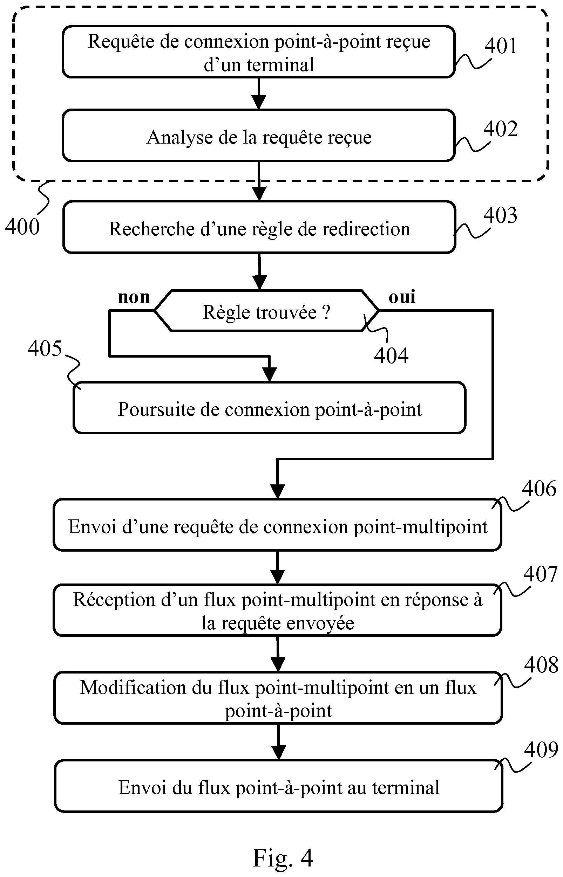

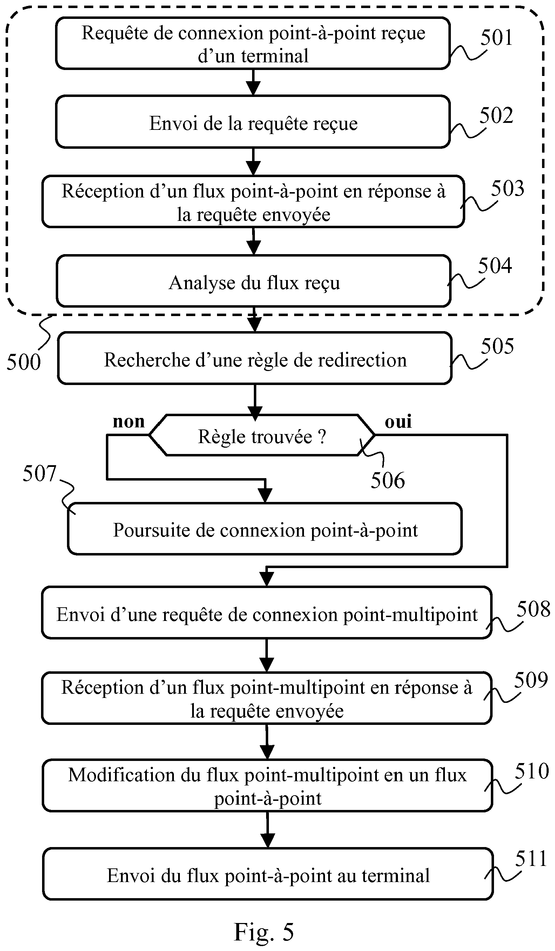

Des exemples de règles de redirection de connexion sont fournis ci-après en relation avec les Figs. 4 et 5. D'autres règles de redirection de connexion peuvent être appliquées. Par exemple, une redirection vers une connexion point-multipoint peut être appliquée en fonction d'une extension de fichier dont la lecture est requise, en fonction d'une liste prédéfinie de contenus multimédia identifiés comme disponibles sur un serveur de contenus multimédia prédéterminé suite à un accord entre le propriétaire du contenu et la personne mettant en œuvre le système de transmission de contenu multimédia, *etc.*

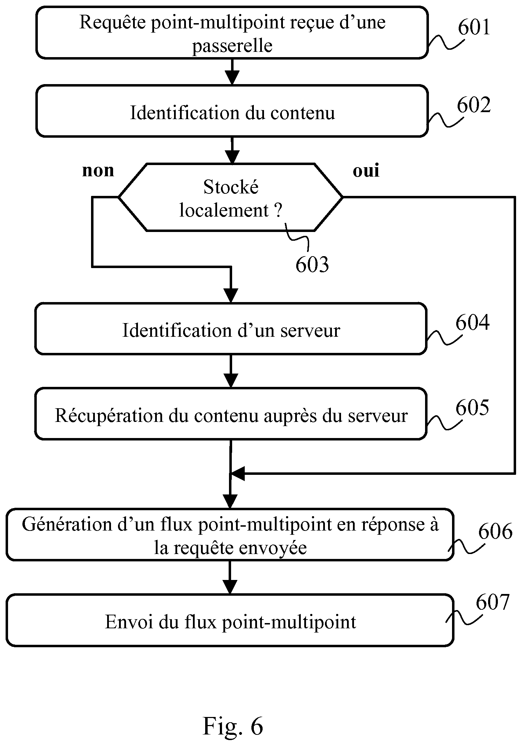

Sur la Fig. 1 sont en outre illustrés un serveur 180 et un serveur 160, appelés par la suite « *serveurs de contenus multimédia d'origine* ». Le serveur de contenus multimédia d'origine 180 est situé dans le second réseau de communication 100. Le serveur de contenus multimédia d'origine 160 est situé dans un troisième réseau de communication 110. Les échanges de données entre les second 100 et troisième 110 réseaux de communication peuvent se faire *via* une autre passerelle reliant ces deux réseaux de communication. Les échanges de données entre les second 100 et troisième 110 réseaux de communication peuvent aussi se faire *via* un réseau de communication fédérateur, parfois appelé *dorsale Internet* (« *Internet backbone* » en anglais) ou réseau cœur (« *core network* » en anglais) selon le contexte. Les serveurs de contenus multimédia d'origine 160 et 180 permettent au serveur de contenus multimédia 140 de récupérer des contenus multimédia à transmettre aux terminaux 170, 171, 172, comme décrit ci-après en relation avec la Fig. 6.

La Fig. 2 illustre schématiquement un exemple d'architecture matérielle de la passerelle 130. La passerelle 130 comprend alors, reliés par un bus de communication 206 : un processeur ou CPU (« *Central Processing Unit* » en anglais ou « *Unité Centrale de Traitement* » en français) 200 ; une mémoire vive RAM (« *Random Access Memory* » en anglais ou « *Mémoire à Accès Aléatoire* » en français) 201 ; une mémoire morte ROM (« *Read Only Memory* » en anglais ou « *Mémoire à Lecture Seule* » en français) 202 ; une première interface de communication 204 avec le premier réseau de communication 120 ; une seconde interface de communication 205 avec le second réseau de communication 100 ; et une unité de stockage, telle qu'un disque dur (HDD ou « *Hard Disk Drive* » en anglais), ou un lecteur 203 de support de stockage, tel qu'un lecteur de cartes SD (« *Secure Digital Card* » en anglais ou « *Carte Numérique Sécurisée* » en français).

Le processeur 200 est capable d'exécuter des instructions chargées dans la RAM 201 à partir de la ROM 202, d'une mémoire externe (non représentée), d'un support de stockage tel qu'une carte SD, ou d'un réseau de communication. Lorsque la passerelle 130 est mise sous tension, le processeur 200 est capable de lire de la RAM 201 des instructions et de les exécuter. Ces instructions forment un programme d'ordinateur causant la mise en œuvre, par le processeur 200, de tout ou partie des algorithmes décrits ci-après en relation avec les Figs. 4 et 5.

Tout ou partie des algorithmes décrits ci-après en relation avec les Figs. 4 et 5 peut être implémenté sous forme logicielle par exécution d'un ensemble d'instructions par une machine programmable, tel qu'un DSP (« *Digital Signal Processor* » en anglais ou « *Unité de Traitement de Signal Numérique* » en français) ou un microcontrôleur, ou être implémenté sous forme matérielle par une machine ou un composant dédié, tel qu'un FPGA (« *Field-Programmable Gate Array* » en anglais ou *Matrice de Portes Programmable sur Champ* en français) ou un ASIC (« *Application-Specific Integrated Circuit* » en anglais ou « *Circuit Intégré Spécifique à une Application* » en français).

La Fig. 3 illustre schématiquement un exemple d'architecture matérielle du serveur de contenus multimédia 140. Le serveur de contenus multimédia 140 comprend alors, reliés par un bus de communication 306 : un processeur ou CPU 300 ; une RAM 301 ; une ROM 302 ; une interface de communication 304 avec le second réseau de communication 100 ; et une unité de stockage 303, telle qu'un disque dur HDD, ou un lecteur de support de stockage.

Le processeur 300 est capable d'exécuter des instructions chargées dans la RAM 301 à partir de la ROM 302, d'une mémoire externe (non représentée), d'un support de stockage, tel qu'un disque dur, ou d'un réseau de communication. Lorsque le serveur de contenus multimédia 140 est mis sous tension, le processeur 300 est capable de lire de la RAM 301 des instructions et de les exécuter. Ces instructions forment un programme d'ordinateur causant la mise en œuvre, par le processeur 300, de tout ou partie de l'algorithme décrit ci-après en relation avec la Fig. 6.

Tout ou partie de l'algorithme décrit ci-après en relation avec la Fig. 6 peut être implémenté sous forme logicielle par exécution d'un ensemble d'instructions par une machine programmable, tel qu'un DSP ou un microcontrôleur, ou être implémenté sous forme matérielle par une machine ou un composant dédié, tel qu'un FPGA ou un ASIC.

La Fig. 4 illustre un premier algorithme mis en œuvre par la passerelle 130.

Dans une étape 401, la passerelle 130 reçoit une requête d'un terminal 170, 171 ou 172. Considérons que cette requête est reçue du terminal 170. Cette requête est une requête d'établissement de connexion point-à-point (« *unicast* » en anglais) avec un serveur de contenus multimédia.

Différents protocoles de communication et plus particulièrement d'établissement de connexion peuvent être mis en œuvre dans le cadre de la présente invention. De manière préférentielle, les dispositifs représentés sur la Fig. 1 utilisent le protocole IP (« *Internet Protocol* » en anglais), par exemple dans sa version 4 (*IPv4*) définie dans le document normatif RFC 791 ou dans sa version 6 (*IPv6*) définie dans le document normatif RFC 2460. Dans ce cadre préférentiel, les flux de contenus multimédia peuvent être transmis sous la forme de datagrammes UDP (« *User Datagram Protocol* » en anglais) définis dans le document normatif RFC 768. Selon une variante de réalisation, les flux de contenus multimédia peuvent être transmis sous la forme de segments TCP (« *Transmission Control Protocol* » en anglais) définis dans le document normatif RFC 793.

Par exemple, la requête reçue à l'étape 401 indique que le terminal 170 requiert l'établissement d'une connexion point-à-point pour la transmission d'un contenu multimédia dont l'URL est, selon le protocole HTTP (« *HyperText Transfer Protocol* » en anglais) tel que défini dans le document normatif RFC 2616 pour la version 1.1, la suivante : http://172.2.2.33/monContenuVideo. D'autres protocoles de connexion peuvent être mis en œuvre, comme par exemple le protocole RTSP (« *Real Time Streaming Protocol* » en anglais).

La requête reçue à l'étape 401 peut être adressée à un serveur de contenus multimédia présent dans le second réseau de communication 100, tel que le serveur de contenus multimédia 140 ou le serveur de contenus multimédia d'origine 180, ou sur un serveur de contenus multimédia présent dans le troisième réseau de communication 110, tel que le serveur de contenus multimédia d'origine 160.

Dans une étape 402 suivante, la passerelle 130 procède à une analyse du contenu de la requête en fonction du protocole utilisé. Lors de cette analyse, la passerelle 130 applique un filtre sur la requête reçue et tente de récupérer des informations échangées pendant la mise en œuvre de la connexion point-à-point et servant à identifier le contenu multimédia requis par le terminal 170. Dans l'exemple précédent, la passerelle 130 cherche à identifier l'URL identifiant le contenu multimédia.

Par la mise en œuvre des étapes 401 et 402, la passerelle 130 effectue une étape 400 de détection d'une mise en œuvre de connexion point-à-point destinée à une transmission d'un contenu multimédia depuis un serveur vers le terminal 170 *via* la passerelle 130.

Dans une étape suivante 403, la passerelle 130 recherche une règle de redirection de connexion en fonction des informations récupérées lors de l'étape 402. Chaque règle définit, en fonction du filtre appliqué à l'étape 402, une action de redirection de connexion vers un serveur de contenus multimédia prédéterminé du second réseau de communication 100, comme par exemple le serveur de contenus multimédia 140.

Dans une étape suivante 404, la passerelle 130 détermine si une règle correspondant aux informations récupérées à l'étape 402 a été trouvée. Si tel est le cas, une étape 406 est effectuée ; sinon, une étape 405 est effectuée, pendant laquelle la passerelle 130 permet la poursuite de la connexion point-à-point. En d'autres termes, la passerelle 130 transmet la requête, *via* le second réseau de communication 100, au serveur de contenus multimédia concerné, et laisse s'établir la connexion point-à-point entre le serveur de contenus multimédia considéré et le terminal 170. L'algorithme décrit ci-après en relation avec la Fig. 5 peut alors être appliqué.

Dans l'étape 406, la passerelle 130 transmet une requête de connexion point-multipoint (« *multicast* » en anglais) pour recevoir le contenu multimédia, en provenance du serveur prédéterminé selon la règle trouvée, sous la forme d'un flux selon une connexion point-multipoint.

Par exemple, une telle requête peut être formulée selon le protocole IGMP (« *Internet Group Management Protocol* » en anglais) ou selon le protocole (« *Multicast Listener Discovery* » en anglais), tels que définis dans le document normatif RFC 4604. En d'autres termes, la passerelle 130 établit une connexion point-multipoint à destination de la passerelle 130 pour recevoir le contenu multimédia.

La passerelle 130 peut transmettre une requête au serveur de contenus multimédia 140, cette requête comportant un identifiant du contenu multimédia concerné, afin de mettre en œuvre la connexion point-multipoint pour la transmission du contenu multimédia. Cette requête peut en outre comporter des données d'identification du serveur de contenus multimédia d'origine par lequel le contenu multimédia considéré est disponible. Par exemple, la requête peut contenir l'URL contenue dans la requête reçue à l'étape 401.

Dans une étape 407 suivante, la passerelle 130 reçoit le contenu multimédia sous la forme d'un flux selon la connexion point-multipoint établie à l'étape 406.

Dans une étape 408 suivante, la passerelle 130 modifie le flux reçu selon la connexion point-multipoint dans l'étape 407 pour générer un flux selon la connexion point-à-point requise par le terminal 170 à l'étape 401.

La passerelle 130 peut s'abonner au flux point-multipoint, recevoir les données multimédia correspondantes, les stocker et les délivrer à la demande, selon le protocole HTTP, au terminal 170.

Dans une étape 409 suivante, la passerelle 130 transmet le contenu multimédia au terminal 170 sous la forme du flux généré selon la connexion point-à-point.

La Fig. 5 illustre un second algorithme mis en œuvre par la passerelle 130. Cet algorithme peut être mis en œuvre en remplacement ou en complément de celui décrit en relation avec la Fig. 4.

Dans une étape 501, la passerelle 130 reçoit une requête d'un terminal 170, 171 ou 172. Considérons que cette requête est reçue du terminal 170. Cette requête est une requête d'établissement de connexion point-à-point avec un serveur de contenus multimédia.

Dans une étape 502 suivante, la passerelle 130 transmet la requête, *via* le second réseau de communication 100, au serveur de contenus multimédia concerné, et laisse s'établir la connexion point-à-point entre le serveur de contenus multimédia considéré et le terminal 170, jusqu'à ce que la passerelle 130 commence à recevoir le contenu multimédia sous la forme d'un flux selon la connexion point-multipoint.

Dans une étape 503 suivante, la passerelle 130 commence à recevoir le contenu multimédia sous la forme du flux selon la connexion point-multipoint. La transmission du flux, et donc du contenu, ne s'effectue pas jusqu'au terminal 170 et est stoppée par la passerelle 130.

Dans une étape 504 suivante, la passerelle 130 analyse le flux reçu et préférentiellement le contenu multimédia. Lors de cette analyse, la passerelle 130 applique un filtre sur le flux reçu et tente de récupérer des informations échangées pendant la mise en œuvre de la connexion point-à-point et servant à identifier le contenu multimédia requis par le terminal 170. La passerelle 130 obtient des données d'inoculation, de signature ou de tatouage numérique à partir du flux reçu selon la connexion point-à-point. Les données d'inoculation sont soit contenues dans le flux reçu, soit déterminées par la passerelle 130 à partir du flux reçu. Les données de signature sont déterminées par la passerelle 130 à partir du flux reçu par application d'une fonction de hachage (« *hash function* » en anglais) sur les données du flux reçu. Les données de tatouage numérique sont contenues dans le contenu multimédia et sont récupérées par la passerelle 130.

Dans un mode de réalisation préférentiel, la passerelle 130 peut enrichir la base de règle de redirection de connexion du serveur 150 en fournissant au serveur 150 les données d'inoculation, de signature ou de tatouage numérique obtenues à l'étape 503 en association avec une URL contenue dans la requête reçue du terminal 170 à l'étape 501.

Par la mise en œuvre des étapes 501 à 504, la passerelle 130 effectue une étape 500 de détection d'une mise en œuvre de connexion point-à-point destinée à une transmission d'un contenu multimédia depuis un serveur vers le terminal 170 *via* la passerelle 130.

Dans une étape suivante 505, la passerelle 130 recherche une règle de redirection de connexion en fonction des informations récupérées lors de l'étape 504. Chaque règle définit, en fonction du filtre appliqué à l'étape 504, une action de redirection de connexion vers un serveur de contenus multimédia prédéterminé du second réseau de communication 100, comme par exemple le serveur de contenus multimédia 140.

Dans une étape suivante 506, la passerelle 130 détermine si une règle correspondant aux informations récupérées à l'étape 504 a été trouvée. Si tel est le cas, une étape 508 est effectuée ; sinon, une étape 507 est effectuée, pendant laquelle la passerelle 130 permet la poursuite de la connexion point-à-point. En d'autres termes, la passerelle 130 relaie le contenu multimédia sous la forme d'un flux selon la connexion point-à-point au terminal 170.

Dans l'étape 508, la passerelle 130 transmet une requête de connexion point-multipoint (« *multicast* » en anglais) pour recevoir le contenu multimédia, en provenance du serveur prédéterminé selon la règle trouvée, sous la forme d'un flux selon une connexion point-multipoint. En d'autres termes, la passerelle 130 établit une connexion point-multipoint à destination de la passerelle 130 pour recevoir le contenu multimédia.

La passerelle 130 peut transmettre une requête au serveur de contenus multimédia 140, cette requête comportant un identifiant du contenu multimédia concerné, afin de mettre en œuvre la connexion point-multipoint pour la transmission du contenu multimédia. Cette requête peut en outre comporter des données d'identification du serveur de contenus multimédia d'origine par lequel le contenu multimédia considéré est disponible. Par exemple, la requête peut contenir les données d'inoculation, de signature ou de tatouage numérique, et l'URL contenue dans la requête reçue à l'étape 501.

Dans une étape 509 suivante, la passerelle 130 reçoit le contenu multimédia sous la forme d'un flux selon la connexion point-multipoint établie à l'étape 508.

Dans une étape 510 suivante, la passerelle 130 modifie le flux reçu selon la connexion point-multipoint dans l'étape 509 pour générer un flux selon la connexion point-à-point requise par le terminal 170 à l'étape 501.

Dans une étape 511 suivante, la passerelle 130 transmet le contenu multimédia au terminal 170 sous la forme du flux généré selon la connexion point-à-point.

Ainsi, que ce soit par la mise en œuvre de l'algorithme décrit en relation avec la Fig. 4 ou celui décrit en relation avec la Fig. 5, la passerelle 130 permet de réduire la consommation des ressources du réseau de communication 100. Si par exemple un utilisateur actionne le terminal 170 pour visualiser un contenu multimédia diffusé en direct (« *live* » en anglais) par le serveur de contenu d'origine 160 ou 180, la passerelle 130 peut s'abonner à la diffusion point-multipoint de ce même contenu par le serveur de contenu 140. Un tel contenu diffusé en direct est par exemple une émission télévisuelle d'une chaîne. Cette opération s'effectue en outre de manière transparente pour l'utilisateur du terminal 170.

Dans un mode de réalisation particulier, la passerelle 130 peut avoir recours à une règle de redirection de connexion pour un contenu multimédia disponible selon un format de flux adaptatif (« *Adaptive Streaming* » en anglais), tel que HLS (« *HTTP Live Streaming* ») développé par la société Apple (marque déposée) ou « *Smooth Streaming* » développé par la société Microsoft ou DASH (« *Dynamic Adaptive Streaming over HTTP* » en anglais) décrit dans le document normatif ISO/IEC DIS 23009-1.2. Ainsi, la passerelle 130 peut, outre rediriger la transmission du contenu multimédia vers une connexion point-multipoint, intercepter et modifier le manifeste (« *manifest* » en anglais) décrivant les débits (« *bitrate* » en anglais) auxquels le contenu multimédia est disponible, de sorte à supprimer au moins un débit inscrit dans le manifeste. Le(s) débit(s) supprimé(s) est(sont) préférentiellement le(s) plus grand(s) parmi les débits inscrits dans le manifeste. Ainsi, le terminal 170 ne peut requérir de transmission à ce(s) débit(s) et la consommation des ressources du réseau de communication 100 est réduite.

La Fig. 6 illustre un algorithme mis en œuvre par le serveur de contenus multimédia 140.

Dans une étape 601, le serveur de contenus multimédia 140 reçoit une requête de connexion point-multipoint pour la transmission d'un contenu multimédia en provenance d'une passerelle, telle que la passerelle 130. Cette requête correspond à celle transmise par la passerelle 130 lors de l'étape 406 ou 508.

Dans une étape 602 suivante, le serveur de contenus multimédia 140 identifie le contenu multimédia concerné par la requête. La requête contient des informations permettant cette identification. Par exemple, la requête contient une URL permettant d'identifier le contenu multimédia, ou des données d'inoculation, de signature ou de tatouage numérique.

Dans une étape suivante 603, le serveur de contenus multimédia 140 détermine si le contenu multimédia identifié est stocké localement. Si tel est le cas, une étape 606 est effectuée ; sinon, une étape 604 est effectuée, pendant laquelle le serveur de contenus multimédia 140 identifie le serveur de contenus multimédia d'origine par lequel le contenu multimédia est disponible. Par exemple, cette identification est contenue dans l'URL transmise dans la requête reçue à l'étape 601.

Dans une étape 605 suivante, le serveur de contenus multimédia 140 récupère le contenu auprès du serveur de contenus multimédia d'origine identifié à l'étape 605. Ainsi, le contenu multimédia peut être mis à disposition en diffusion point-multipoint par le serveur de contenus multimédia 140, alors que le serveur de contenus multimédia d'origine ne peut être destiné qu'à diffuser ce contenu multimédia *via* des connexions point-à-point. Ensuite, l'étape 606 est effectuée.

Dans l'étape 606, le serveur de contenus multimédia 140 génère un flux point-multipoint en réponse à la requête reçue à l'étape 601.

Dans une étape 607 suivante, le serveur de contenus multimédia 140 établit la connexion point-multipoint avec la passerelle concernée et transmet à cette passerelle le contenu multimédia sous la forme du flux généré selon la connexion point-multipoint.

## Revendications

1. Passerelle (130) adaptée pour relier un premier réseau de communication (120) comportant au moins un terminal (170;171;172) destiné à consommer des contenus multimédia et un second réseau de communication (100) via lequel ladite passerelle est destinée à recevoir lesdits contenus multimédia sous forme de flux, **caractérisée en ce qu'**elle comporte :
- des moyens de détection (400;500) d'une mise en œuvre de connexion point-à-point destinée à une transmission d'un dit contenu multimédia depuis un serveur d'origine (140;160;180) vers un dit terminal (170) dudit premier réseau via ladite passerelle ;
- des moyens de recherche (403;505) d'une règle de redirection de connexion en fonction d'informations échangées par ledit serveur d'origine (140;160;180) et ledit terminal (170) pendant la mise en œuvre de ladite connexion point-à-point ;
- des moyens d'établissement (406;508) d'une connexion point-multipoint à destination de ladite passerelle (130) pour recevoir ledit contenu multimédia, mis en œuvre lorsque ladite règle de redirection est trouvée, et d'abonnement à une diffusion point-multipoint dudit contenu multimédia via la connexion point-multipoint ;
- des moyens de réception (407;509) dudit contenu multimédia sous la forme d'un flux selon la connexion point-multipoint ;
- des moyens de modification (408;510) du flux reçu selon la connexion point-multipoint pour générer un flux selon la connexion point-à-point requise par ledit terminal (170) ; et
- des moyens de transmission (409;511) audit terminal (170) dudit contenu multimédia sous la forme du flux selon la connexion point-à-point.

2. Passerelle selon la revendication 1, **caractérisée en ce que** lesdits moyens de détection comportent des moyens de détection (401) d'une requête d'établissement de la connexion point-à-point transmise par ledit terminal à destination dudit serveur d'origine, et **en ce que** lesdites informations échangées sont des données de localisation uniforme de ressource, identifiant ledit contenu multimédia et comprises dans ladite requête.

3. Passerelle selon la revendication 2, **caractérisée en ce qu'**elle comporte des moyens de transmission (406) à un serveur prédéterminé via ledit second réseau desdites données de localisation uniforme de ressource, et **en ce que** les moyens de réception dudit contenu multimédia sous la forme d'un flux selon la connexion point-multipoint sont adaptés pour recevoir ledit contenu multimédia en provenance dudit serveur prédéterminé.

4. Passerelle selon l'une quelconque des revendications 1 à 3, **caractérisée en ce que** lesdits moyens de détection comportent :
- des moyens de réception (503), en provenance dudit serveur d'origine, dudit contenu multimédia sous la forme d'un flux selon la connexion point-à-point ; et
- des moyens d'obtention (504), à partir dudit flux selon la connexion point-à-point, de données d'inoculation, de signature ou de tatouage numérique identifiant ledit contenu multimédia ;
et **en ce que** lesdites informations échangées sont lesdites données d'inoculation, de signature ou de tatouage numérique.

5. Passerelle selon la revendication 4, **caractérisée en ce qu'**elle comporte des moyens d'association desdites données d'inoculation, de signature ou de tatouage numérique et des données de localisation uniforme de ressource comprises dans une requête d'établissement de la connexion point-à-point transmise par ledit terminal à destination dudit serveur d'origine, afin de définir une nouvelle règle de redirection de connexion.

6. Passerelle selon l'une quelconque des revendications 4 et 5, **caractérisée en ce qu'**elle comporte des moyens de transmission (508) à un serveur prédéterminé via ledit second réseau desdites données d'inoculation, de signature ou de tatouage numérique, et **en ce que** les moyens de réception dudit contenu multimédia sous la forme d'un flux selon la connexion point-multipoint sont adaptés pour recevoir ledit contenu multimédia en provenance dudit serveur prédéterminé.

7. Passerelle selon l'une quelconque des revendications 1 à 6, le contenu multimédia étant diffusé sous forme d'un flux adaptatif, **caractérisée en ce qu'**elle comporte des moyens de modification du manifeste indiquant des débits auxquels ledit contenu multimédia est disponible par suppression d'au moins un débit.

8. Système comportant au moins une passerelle selon l'une des revendications 1 à 7, **caractérisé en ce qu'**il comporte en outre un serveur (140) comportant des moyens d'obtention dudit contenu multimédia à partir dudit serveur d'origine (160;180).

9. Système selon la revendication 8, **caractérisé en ce qu'**il comporte un autre serveur (150) comportant une base de règle de redirection de connexion, et **en ce que** chaque passerelle comporte des moyens d'obtention de règles de redirection de connexion auprès dudit autre serveur.

10. Procédé mis en œuvre par une passerelle (130) reliant un premier réseau de communication (120) comportant au moins un terminal (170;171;172) destiné à consommer des contenus multimédia et un second réseau de communication (100) via lequel ladite passerelle est destinée à recevoir lesdits contenus multimédia sous forme de flux, **caractérisé en ce qu'**il comporte les étapes suivantes :
- détection (400;500) d'une mise en œuvre de connexion point-à-point destinée à une transmission d'un dit contenu multimédia depuis un serveur d'origine (140;160;180) vers un dit terminal (170) dudit premier réseau via ladite passerelle ;
- recherche (403;505) d'une règle de redirection de connexion en fonction d'informations échangées par ledit serveur d'origine (140;160;180) et ledit terminal (170) pendant la mise en œuvre de ladite connexion point-à-point ;
- établissement (406;508) d'une connexion point-multipoint à destination de ladite passerelle (130) pour transmettre ledit contenu multimédia, et abonnement à une diffusion point-multipoint dudit contenu multimédia via la connexion point-multipoint ;
- réception (407;509) dudit contenu multimédia sous la forme d'un flux selon la connexion point-multipoint ;
- modification (408;510) du flux reçu selon la connexion point-multipoint pour générer un flux selon la connexion point-à-point requise par ledit terminal (170) ; et
- transmission (409;511) audit terminal (170) dudit contenu multimédia sous la forme du flux selon la connexion point-à-point.

11. Programme d'ordinateur, **caractérisé en ce qu'**il comprend des instructions pour mettre en œuvre, par une passerelle (130), le procédé selon la revendication 10, lorsque ledit programme est exécuté par un processeur (200) de ladite passerelle.

12. Moyens de stockage, **caractérisés en ce qu'**ils stockent un programme d'ordinateur comprenant des instructions pour mettre en œuvre, par une passerelle (130), le procédé selon la revendication 10, lorsque ledit programme est exécuté par un processeur (200) de ladite passerelle.

## Patentansprüche

1. Gateway (130), welches dafür eingerichtet ist, ein erstes Kommunikationsnetz (120), das wenigstens ein Endgerät (170; 171; 172) umfasst, das dazu bestimmt ist, Multimedia-Inhalte zu konsumieren, und ein zweites Kommunikationsnetz (100), über welches das Gateway die Multimedia-Inhalte in Form von Datenströmen zu empfangen bestimmt ist, zu verbinden, **dadurch gekennzeichnet, dass** es umfasst:
- Mittel zur Erkennung (400; 500) einer Realisierung einer Punkt-zu-Punkt-Verbindung, die für eine Übertragung eines besagten Multimedia-Inhalts von einem Ursprungsserver (140; 160; 180) an ein besagtes Endgerät (170) des ersten Netzes über das Gateway bestimmt ist;
- Mittel zur Suche (403; 505) nach einer Regel zur Verbindungsumleitung in Abhängigkeit von Informationen, die durch den Ursprungsserver (140; 160; 180) und das Endgerät (170) während der Realisierung der Punkt-zu-Punkt-Verbindung ausgetauscht werden;
- Mittel zur Herstellung (406; 508) einer Punkt-zu-Mehrpunkt-Verbindung zu dem Gateway (130) zum Empfangen des Multimedia-Inhalts, die erfolgt, wenn die Umleitungsregel gefunden wurde, und zum Abonnement für eine Punkt-zu-Mehrpunkt-Sendung des Multimedia-Inhalts über die Punkt-zu-Mehrpunkt-Verbindung;
- Mittel zum Empfang (407; 509) des Multimedia-Inhalts in Form eines Datenstroms gemäß der Punkt-zu-Mehrpunkt-Verbindung;
- Mittel zur Modifikation (408; 510) des gemäß der Punkt-zu-Mehrpunkt-Verbindung empfangenen Datenstroms, um einen Datenstrom gemäß der Punkt-zu-Punkt-Verbindung zu erzeugen, die von dem Endgerät (170) angefordert wird; und
- Mittel zur Übertragung (409; 511) des Multimedia-Inhalts in Form des Datenstroms gemäß der Punkt-zu-Punkt-Verbindung an das Endgerät (170).

2. Gateway nach Anspruch 1, **dadurch gekennzeichnet, dass** die Mittel zur Erkennung Mittel zur Erkennung (401) einer Anforderung zur Herstellung der Punkt-zu-Punkt-Verbindung umfassen, die von dem Endgerät an den Ursprungsserver übertragen wird, und dadurch, dass die ausgetauschten Informationen URL-Daten sind, die den Multimedia-Inhalt identifizieren und in der Anforderung enthalten sind.

3. Gateway nach Anspruch 2, **dadurch gekennzeichnet, dass** es Mittel zur Übertragung (406) der URL-Daten an einen vorbestimmten Server über das zweite Netz umfasst, und dadurch, dass die Mittel zum Empfang des Multimedia-Inhalts in Form eines Datenstroms gemäß der Punkt-zu-Mehrpunkt-Verbindung dafür eingerichtet sind, den Multimedia-Inhalt von dem vorbestimmten Server zu empfangen.

4. Gateway nach einem der Ansprüche 1 bis 3, **dadurch gekennzeichnet, dass** die Mittel zur Erkennung umfassen:
- Mittel zum Empfang (503), von dem Ursprungsserver, des Multimedia-Inhalts in Form eines Datenstroms gemäß der Punkt-zu-Punkt-Verbindung; und
- Mittel zur Gewinnung (504), aus dem Datenstrom gemäß der Punkt-zu-Punkt-Verbindung, von Fingerabdruck-, Signatur- oder digitalen Wasserzeichendaten, die den Multimedia-Inhalt identifizieren;
und dadurch, dass die ausgetauschten Informationen die Fingerabdruck-, Signatur- oder digitale Wasserzeichendaten sind.

5. Gateway nach Anspruch 4, **dadurch gekennzeichnet, dass** es Mittel zur Zuordnung der Fingerabdruck-, Signatur- oder digitalen Wasserzeichendaten und der URL-Daten, die in einer von dem Endgerät an den Ursprungsserver übertragenen Anforderung zur Herstellung der Punkt-zu-Punkt-Verbindung enthalten sind, umfasst, um eine neue Regel zur Verbindungsumleitung zu definieren.

6. Gateway nach einem der Ansprüche 4 und 5, **dadurch gekennzeichnet, dass** es Mittel zur Übertragung (508) der Fingerabdruck-, Signatur- oder digitalen Wasserzeichendaten über das zweite Netz an einen vorbestimmten Server umfasst, und dadurch, dass die Mittel zum Empfang des Multimedia-Inhalts in Form eines Datenstroms gemäß der Punkt-zu-Mehrpunkt-Verbindung dafür eingerichtet sind, den Multimedia-Inhalt von dem vorbestimmten Server zu empfangen.

7. Gateway nach einem der Ansprüche 1 bis 6, wobei der Multimedia-Inhalt in Form eines adaptiven Streamings rundgesendet wird, **dadurch gekennzeichnet, dass** es Mittel zur Änderung des Manifests, welches Bitraten angibt, mit denen der Multimedia-Inhalt verfügbar ist, durch Weglassen wenigstens einer Bitrate umfasst.

8. System, welches wenigstens ein Gateway nach einem der Ansprüche 1 bis 7 umfasst, **dadurch gekennzeichnet, dass** es außerdem einen Server (140) umfasst, der Mittel zur Gewinnung des Multimedia-Inhalts von dem Ursprungsserver (160; 180) umfasst.

9. System nach Anspruch 8, **dadurch gekennzeichnet, dass** es einen weiteren Server (150) umfasst, der eine Datenbank von Regeln zur Verbindungsumleitung umfasst, und dadurch, dass jedes Gateway Mittel zur Gewinnung von Regeln zur Verbindungsumleitung von dem weiteren Server umfasst.

10. Verfahren, welches von einem Gateway (130) durchgeführt wird, welches ein erstes Kommunikationsnetz (120), das wenigstens ein Endgerät (170; 171; 172) umfasst, das dazu bestimmt ist, Multimedia-Inhalte zu konsumieren, und ein zweites Kommunikationsnetz (100), über welches das Gateway die Multimedia-Inhalte in Form von Datenströmen zu empfangen bestimmt ist, verbindet, **dadurch gekennzeichnet, dass** es die folgenden Schritte umfasst:
- Erkennung (400; 500) einer Realisierung einer Punkt-zu-Punkt-Verbindung, die für eine Übertragung eines besagten Multimedia-Inhalts von einem Ursprungsserver (140; 160; 180) an ein besagtes Endgerät (170) des ersten Netzes über das Gateway bestimmt ist;
- Suche (403; 505) nach einer Regel zur Verbindungsumleitung in Abhängigkeit von Informationen, die durch den Ursprungsserver (140; 160; 180) und das Endgerät (170) während der Realisierung der Punkt-zu-Punkt-Verbindung ausgetauscht werden;
- Herstellung (406; 508) einer Punkt-zu-Mehrpunkt-Verbindung zu dem Gateway (130) zum Übertragen des Multimedia-Inhalts, und Abonnement für eine Punkt-zu-Mehrpunkt-Sendung des Multimedia-Inhalts über die Punkt-zu-Mehrpunkt-Verbindung;
- Empfang (407; 509) des Multimedia-Inhalts in Form eines Datenstroms gemäß der Punkt-zu-Mehrpunkt-Verbindung;
- Modifikation (408; 510) des gemäß der Punkt-zu-Mehrpunkt-Verbindung empfangenen Datenstroms, um einen Datenstrom gemäß der Punkt-zu-Punkt-Verbindung zu erzeugen, die von dem Endgerät (170) angefordert wird; und
- Übertragung (409; 511) des Multimedia-Inhalts in Form des Datenstroms gemäß der Punkt-zu-Punkt-Verbindung an das Endgerät (170).

11. Computerprogramm, **dadurch gekennzeichnet, dass** es Anweisungen zur Durchführung, durch ein Gateway (130), des Verfahrens nach Anspruch 10, wenn das Programm von einem Prozessor (200) des Gateways ausgeführt wird, umfasst.

12. Speichermittel, **dadurch gekennzeichnet, dass** sie ein Computerprogramm speichern, welches Anweisungen zur Durchführung, durch ein Gateway (130), des Verfahrens nach Anspruch 10, wenn das Programm von einem Prozessor (200) des Gateways ausgeführt wird, umfasst.

## Claims

1. Gateway (130) designed to connect a first communication network (120) comprising at least one terminal (170; 171; 172) intended to consume items of multimedia content and a second communication network (100) via which said gateway is intended to receive said items of multimedia content in stream form, **characterized in that** it comprises:
- means (400; 500) for detecting implementation of a point-to-point connection intended for transmission of one said item of multimedia content from an origin server (140; 160; 180) to one said terminal (170) of said first network via said gateway;
- means (403; 505) for searching for a connection redirection rule on the basis of information exchanged by said origin server (140; 160; 180) and said terminal (170) during the implementation of said point-to-point connection;
- means (406; 508) for establishing a point-to-multipoint connection to said gateway (130) for receiving said item of multimedia content, implemented when said redirection rule is found, and for subscribing to a point-to-multipoint broadcast of said item of multimedia content via the point-to-multipoint connection;
- means (407; 509) for receiving said item of multimedia content in the form of a stream in accordance with the point-to-multipoint connection;
- means (408; 510) for modifying the stream received in accordance with the point-to-multipoint connection to generate a stream in accordance with the point-to-point connection requested by said terminal (170); and
- means (409; 511) for transmitting said item of multimedia content to said terminal (170) in the form of the stream in accordance with the point-to-point connection.

2. Gateway according to Claim 1, **characterized in that** said detecting means comprise means (401) for detecting a request for the establishment of the point-to-point connection transmitted by said terminal to said origin server, and **in that** said exchanged information is uniform resource locator data identifying said item of multimedia content and included in said request.

3. Gateway according to Claim 2, **characterized in that** it comprises means (406) for transmitting said uniform resource locator data to a predetermined server via said second network, and **in that** the means for receiving said item of multimedia content in the form of a stream in accordance with the point-to-multipoint connection are designed to receive said item of multimedia content from said predetermined server.

4. Gateway according to any one of Claims 1 to 3, **characterized in that** said detecting means comprise:
- means (503) for receiving, from said origin server, said item of multimedia content in the form of a stream in accordance with the point-to-point connection; and
- means (504) for obtaining, from said stream in accordance with the point-to-point connection, inoculation, signature or digital watermarking data identifying said item of multimedia content;
and **in that** said exchanged information is said inoculation, signature or digital watermarking data.

5. Gateway according to Claim 4, **characterized in that** it comprises means for associating said inoculation, signature or digital watermarking data with the uniform resource locator data included in a request for the establishment of the point-to-point connection transmitted by said terminal to said origin server, in order to define a new connection redirection rule.

6. Gateway according to either one of Claims 4 and 5, **characterized in that** it comprises means (508) for transmitting said inoculation, signature or digital watermarking data to a predetermined server via said second network, and **in that** the means for receiving said item of multimedia content in the form of a stream in accordance with the point-to-multipoint connection are designed to receive said item of multimedia content from said predetermined server.

7. Gateway according to any one of Claims 1 to 6, the item of multimedia content being broadcast in the form of an adaptive stream, **characterized in that** said gateway comprises means for modifying the manifest indicating the bit rates at which said item of multimedia content is available by removing at least one bit rate.

8. System comprising at least one gateway according to one of Claims 1 to 7, **characterized in that** it further comprises a server (140) comprising means for obtaining said item of multimedia content from said origin server (160; 180).

9. System according to Claim 8, **characterized in that** it comprises another server (150) comprising a connection redirection rule base, and **in that** each gateway comprises means for obtaining connection redirection rules from said other server.

10. Method implemented by a gateway (130) connecting a first communication network (120) comprising at least one terminal (170; 171; 172) intended to consume items of multimedia content and a second communication network (100) via which said gateway is intended to receive said items of multimedia content in stream form, **characterized in that** it comprises the following steps:
- detecting (400; 500) implementation of a point-to-point connection intended for transmission of one said item of multimedia content from an origin server (140; 160; 180) to one said terminal (170) of said first network via said gateway;
- searching (403; 505) for a connection redirection rule on the basis of information exchanged by said origin server (140; 160; 180) and said terminal (170) during the implementation of said point-to-point connection;
- establishing (406; 508) a point-to-multipoint connection to said gateway (130) for transmitting said item of multimedia content, and subscribing to a point-to-multipoint broadcast of said item of multimedia content via the point-to-multipoint connection;
- receiving (407; 509) said item of multimedia content in the form of a stream in accordance with the point-to-multipoint connection;
- modifying (408; 510) the stream received in accordance with the point-to-multipoint connection to generate a stream in accordance with the point-to-point connection requested by said terminal (170); and
- transmitting (409; 511) said item of multimedia content to said terminal (170) in the form of the stream in accordance with the point-to-point connection.

11. Computer program, **characterized in that** it includes instructions for implementing, by way of a gateway (130), the method according to Claim 10, when said program is executed by a processor (200) of said gateway.

12. Storage means, **characterized in that** they store a computer program including instructions for implementing, by way of a gateway (130), the method according to Claim 10, when said program is executed by a processor (200) of said gateway.
